# EUROPEAN PATENT SPECIFICATION

(11) **EP 2 047 343 B1**
(45) Date of publication and mention of the grant of the patent: **05.10.2011**
(21) Application number: 07733330.0
(22) Date of filing: 22.06.2007
(51) Int. Cl.: G05B 19/401, G05B 19/418

(54) **CONTROL OF A MACHINING OPERATION**
STEUERUNG EINER MASCHINENBEARBEITUNGSOPERATION
COMMANDE D'UNE OPÉRATION D'USINAGE

(30) Priority: 24.07.2006 GB 0614596
(43) Date of publication of application: 15.04.2009
(73) Proprietor: Rolls-Royce plc, London SW1E 6AT (GB)
(72) Inventor: CAMERON, Mitchel, Renfrewshire PA6 7LH (GB)
(86) International application number: PCT/GB2007/002335
(87) International publication number: WO 2008/012490

(56) References cited:
- DE-A1- 19 808 565
- US-A- 4 974 165
- US-A- 5 117 169
- US-A- 5 339 249
- US-A1- 2002 099 466
- US-B1- 6 571 145

## Description

This invention relates to the machining and inspection of components, and more particularly to methods for controlling the machines used to perform such operations. In a particular exemplary embodiment of the invention, it is applied to the profile forming of a rotor blade aerofoil for a gas turbine engine.

In a gas turbine engine, each of the rotor blades and stator vanes is of aerofoil cross-section shape and must conform with its intended design, within certain specification limits. For example, each aerofoil has a leading edge designed with a complex geometry to deliver a specific effect. Deviations from the optimum design may result in undesirable reductions in performance, such as aerodynamic stall, compressor surge or reduction in engine efficiency. In some circumstances, relatively small deviations may have significant effects on performance. A similar but different complex geometry governs the definition of the trailing edge of an aerofoil.

Currently, aerofoil and edge forming is either carried out using 'form following' automated polishing techniques or by hand finishing. These techniques simply follow the existing component shape, essentially removing a constant amount of material all over the surface, and thereby either reduce the part thickness, or form a radius or edge. The measurement of the surfaces and dimensions produced by these methods is carried out as a supplementary operation, following the process. Any components that require correction or alteration to fall within the specification limits are then re-processed in an attempt to correct or modify sizes. These existing processes are not capable of determining the quality, variation or conformance of incoming parts, and so these parameters cannot be taken into account in defining the operation to be performed. The unknown condition of incoming components has a large effect on the outgoing conformance and on the profiles produced.

United States patent US4974165 discloses a real-time machining control system in which, during the machining operation, a dimensional measurement system provides an error signal representing the difference between the actual diameter of the workpiece and that of the part program. The error signal is used to control the movement of the cutting tool so that the final actual machined profile and dimensions of the workpiece conform to the part program.

When machine tools are used to form components by removing material, typically there is also progressive wear to the tool face, which will change the profile of the tool face as it is presented to the component. The consequence of this is unpredictability in the amount of material removed by the tool, and in the surface profile and finish it will produce on the component. This increases the variability of the components produced by the process, and increases the number of components that will not fall within the specification limits when measured.

The combination of these uncertainties leads (in spite of the specification limits) to variability and unpredictability in the geometry of the components produced by known methods, with a consequent reduction in their aerodynamic performance.

It would therefore be desirable to devise a method of forming such components which will deliver more consistent components whose geometry is closer to the design intent.

According to the present invention, there is provided a method for controlling the machining of a component as claimed in the independent claims.

An embodiment of the invention will now be described, by way of example only, with reference to the accompanying drawing:

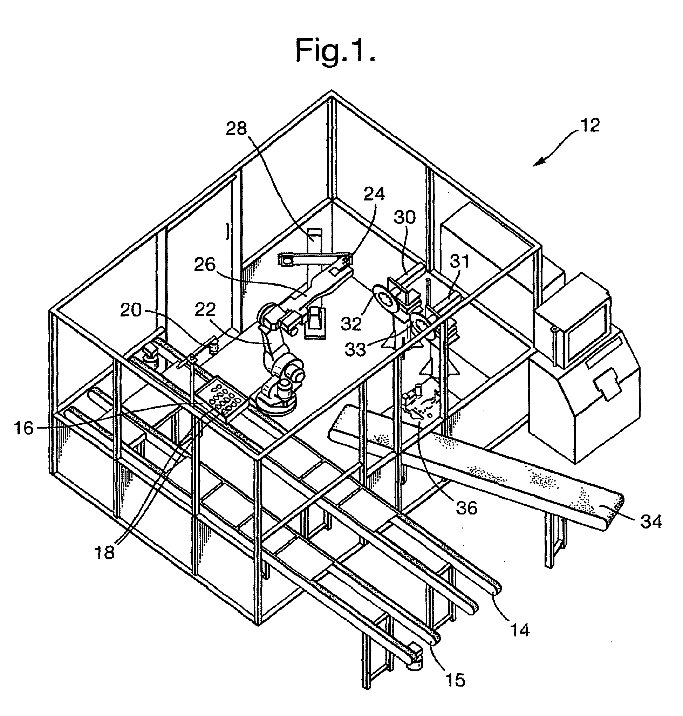

Figure 1 is a schematic illustration of a machining cell equipped to perform one embodiment of the claimed method.

In Figure 1, a machining cell is shown generally at 12. The cell 12 includes a number of machines and devices, whose purpose and operation will be explained below. These machines and devices are linked to a computer (not shown) which can store and process information received from the machines and devices, or their controllers, and issue instructions to them.

This cell is equipped to perform a polishing operation on a rotor blade of a gas turbine engine. As will become clear, the claimed method is applicable to any single- or multiple-stage manufacturing operation.

Incoming blades are brought into the cell on a conveyor 14. A part holder 16 is shown, containing a number of blades 18 on which the polishing operation is to be performed. Typically, in use, a number of such trays would be queued on the conveyor awaiting processing.

An optical reader 20 can detect the positions of the blades 18 within the part holder 16, and can also read a component identifier, such as a barcode (not shown) on each blade 18.

Directed by a part or part holder detector, which may be the optical reader 20, a robot manipulator 22 takes one blade 18 at a time from the part holder 16. An example of such a manipulator is the Fanuc M16ib. The end 24 of the manipulator arm 26 is equipped with a gripper of suitable dimensions to hold the blades 18. A change area 28 permits the storage of other grippers, suitable for other parts of different design or size. Information in the component identifier of the blade 18 can be used to direct the manipulator to mount the correct gripper. The parts may be new, in the process of first manufacture, or they may be service-worn parts which are to be refurbished for further service.

The relevant dimensions of the blade 18 are first measured, and the measurements compared with design data defining the required final shape of the blade following the machining operation.

This comparison may determine that the required shape cannot be made (because, for instance, there is insufficient material). (This is more likely in the case of service-worn parts than in the case of new parts.) In this case the blade 18 will be rejected and the next blade 18 selected from the part holder 16. Rejected blades 18 are placed on the conveyor 34 to be removed from the cell for assessment elsewhere.

Conversely, if the blade 18 is determined to be within specification, then no work is required. The blade 18 is replaced in the part holder 16 and the next blade is selected.

If the blade 18 is acceptable, the comparison between the measured data and the design data is used to define the controlling parameters for the polishing operation, defining the material removal that is needed to produce the required shape. The measured data and the comparison data are stored in computer storage (for example, a database), using the component identifier to link them to the blade.

If the cell contains a number of machines or tools, the data may also be used to select a machine or tool to perform the machining operation. The selection would be based on such parameters as the part to be machined, the amount of material to be removed and the surface finish required. The machining operation may require only one operation, or may require a sequence of operations using one or more machines. For simplicity, a machining operation will now be described in which only a single polishing operation is performed.

A grinder 30 and a polishing machine 31 are provided in the cell. The grinder 30 has a grinding wheel 32, and the polishing machine 31 has a polishing wheel 33.

The blade 18 is delivered to the polishing machine 31 by the manipulator 22. The blade is held in the gripper of the manipulator arm 26 throughout the machining operation. The measurements of the blade 18 made previously, together with the known parameters of the gripper and manipulator arm, are combined to determine the position of the blade 18 relative to the polishing machine 31 datums.

In use, the polishing wheel 33 rotates, and the manipulator arm 26 is moved to cause the blade 18 to bear against the surface of the wheel 33. The polishing wheel 33 must rotate at a known speed and apply a known force to the blade 18, to polish it in accordance with the calculated machining schedule. (Different materials require different speeds and pressures, and a finishing polish will typically be at a lower pressure.) In use, the polishing wheel 33 is subject to progressive wear. To address this problem, the polishing machine 31 includes measuring means by which the condition of the polishing wheel 33 can be determined in use, and its position adjusted so that it continues to exert a known force and surface speed on the blade 18. The progressive wear will also lead to a change in the profile of the polishing wheel, and so at suitable points in the machining cycle the wheel will be re-profiled to restore the correct profile and finish. The measuring means can also determine the profile of the polishing wheel.

This process of measurement and adjustment may take place part way through a machining operation.

Measuring devices incorporated into the machines detect the temperature in the vicinity of the tool. Optionally, further measuring devices in the cell and within the machines detect the ambient pressure and temperature. Changes in these parameters may affect the machining operations, and so the data from the measurements are fed back into the definition of the machining operation to compensate for environmental conditions. Such compensation will normally take place in the initial definition of the machining operation, but if a large change in conditions is detected during a machining operation, the component may also be re-measured or adjustments may be made to the controlling parameters to ensure that the final part is within the acceptance criteria.

As well as using this information for direct feedback control of the current process, the information is stored so that, over time, statistical information can be generated about the environmental conditions in which the process is operating. This information may be used to refine the process definitions, and to apply predictive techniques to process control. For example, if the statistical information permits a better understanding of the effects of changes in ambient temperature on the process performance, then the process control parameters can be changed as soon as ambient temperature changes, ensuring that the products of the process will remain within specification.

After the polishing is complete, the blade 18 is measured again by measuring equipment 36, and the measurements are compared with the design data for the finished blade to determine whether the polished blade 18 is acceptable. Because the definition of the machining operation takes account of the initial condition of the blade 18, the likelihood is high that the blade 18 will be acceptable. The results of the comparison are stored (once again, linked to the part by the component identifier), so that information on any deviations can be used in determining the parameters for the machining of future parts, to further improve the process control. The information from all previous machining operations can be used to generate statistical information about the process, and about adjustments and compensations needed to produce consistent parts within specification.

In the unlikely event that too much material has been removed, the blade 18 is rejected, placed on conveyor 34 and removed from the cell.

Once the blade 18 meets the acceptance criteria, it is returned by the manipulator 22 to the part holder 16. The next blade 18 is then processed, and so on until all the blades 18 from the part holder 16 have been either processed or rejected. The part holder 16 is then transferred to the adjacent conveyor 15, and is moved out of the cell.

It will be appreciated that the embodiment described represents only a single example of the application of the claimed method, and that various modifications may be made without departing from the scope of the invention.

The method is not limited to aerofoil components or gas turbine components, but may be applied to substantially any manufactured component.

The described embodiment performs only a polishing operation. Even within the cell described, the method may be applied to perform a grinding operation, or successively to perform grinding and polishing operations.

The cell may contain more or different machines, and may have a different layout. Some examples of the machines that might be included are grinding, linishing or polishing tools; polishing mops; electrochemical finishing machines; apparatus for surface treatment; hydrostatic presses; apparatus for edge deburring.

More than one example of a particular machine may be included within a cell, thereby increasing the cell's capacity to perform that operation.

The parts may be delivered into the cell, and removed from it, using any convenient means. Several such arrangements are known, including the part holders described, vibrating bowls, cassettes, bandoliers, etc. Conveyors may be used, as shown, or any other suitable transporting means. An alternative handling means may be used instead of the robot manipulator.

The reading of part identity, as described, uses barcodes but may equally well use other techniques such as magnetic characters, magnetic strips, surface-mounted or embedded RFID etc. or a combination of any of these (for example, a visible 2D or 3D barcode combined with an embedded RFID).

The component identity may be used to confirm that the expected part has been selected, and to reject an incorrect part. In the case of RFID, the part history and dimensions when last measured may be retrieved from the RFID tag instead of from computer storage. Likewise, details of work done by the cell, and measurements made therein, may be stored back on to the RFID tag instead of (or as well as) into computer storage.

Contamination on parts may be detected at the part selection stage, and a part may be rejected if too contaminated. Some types of contamination are detrimental to grinding and polishing wheels; or contamination may be transferred to subsequent parts.

In the embodiment described, the part is held by the gripper of the manipulator throughout the machining operation. In other embodiments, particularly where the parts are large, heavy or complex, the part could be secured in a separate fixture. The measurements of the part, together with the known parameters of the fixture, may be combined to determine the position of the blade 18 relative to the fixture datums. The manipulator may then stow the gripper and select a suitable machining tool to machine the part. This machining tool, mounted on and guided by the manipulator, could then perform the machining operation.

Other, or additional, data may be recorded and fed back into the process controlling computer.

The measuring devices and sensors may be duplicated, to give greater confidence in the measurements or to provide redundancy in case of failures.

The process-controlling computer may take the form of a distributed control system. This may be one in which the controllers of the individual machines are linked, or may be one in which the machines are autonomous with only an input trigger.

Where the component identity is stored by RFID, information can be stored in the part itself. For example, information about the service and machining history of a part could be stored, and would then be accessible during subsequent machining or assembly operations.

It will be appreciated that different machines and different tools will suffer different types of progressive wear from that described in connection with grinding and polishing wheels, but the same principle may be applied to measure and compensate for that wear, and periodically to re-profile or refurbish the tool or machine, where that is appropriate. Information on the tool condition and history may be stored and used to manage tool replacement. The stored information can be used to identify when a particular tool has reached the end of its life, or can no longer be refurbished. The tool can be flagged for manual replacement, or (in a suitably equipped system) replaced automatically. It is also possible to use this information to manage tool selection, for example selecting a newer tool for a more critical part or where surface finish is particularly important, or selecting an older tool for a less critical part or for a rough machining operation.

Statistics may be collected not just on the parts, but also on the machines and their performance, this data being used for predictive maintenance. This information may also be used, for example, to prevent high-precision parts from being processed on a machine whose condition is determined to be poor or whose wear is determined to be high. These parts may be rejected from the incoming parts queue, rather than risk producing out of tolerance parts. Such machines may still be used for less critical parts, whose specification lies within the determined capability of the machine. This is advantageous where the cell operates unattended, for instance through the weekend.

It is anticipated that a cell such as that described would be integrated into a larger manufacturing facility, so that completed parts would be transported directly for the next processing step, for example module build. The data stored with each part (and identified by the component identifier) can be passed on to the next process. This is likely to include measured data on the dimensions of the part, but may also include relevant environmental data, for example a temperature of the part at the end of the machining operation. The provision of this information to the next process reduces that need for that process to make measurements, and also permits the control parameters for that next process to incorporate appropriate compensations. In this way the conformity of the parts to their design intent is maintained at a high level, and variation between the key parameters of parts is minimised. Cells may adjoin one another without human or conveyor transport between, so that, for example, a part finishing cell directly feeds an assembly and welding cell, which in turn feeds a module finishing and packing cell.

There is thus provided a method for performing a machining operation that offers a significant improvement over known methods.

The initial machining instructions are derived from the design intent (the shape definition). By feeding back information measured from the parts, from the tools and machines, and from the environment, to modify the controlling parameters for the machining operations, the claimed method produces parts that are more consistent, and whose geometry is closer to the design intent. Their performance is therefore improved. This also allows the machining parameters to be varied and optimised for the conditions and to minimise the processing time and the amount of material working.

By recording the information for all machining operations, statistical data can be generated, and the process control can be further improved by applying this statistical knowledge. This knowledge is used to control the part final shape, tooling maintenance and machine maintenance.

By storing information relevant to each part, so that it can be passed on to subsequent operations in the manufacturing route, the number of discrete measuring operations is reduced, and by taking the known information into account when setting control parameters the conformity of the finished parts is improved. The use of environmental information permits initial control parameters to be set with more confidence. This reduces the total cycle time for making a part and reduces the number of handling operations performed.

## Claims

1. A method for controlling machines used for the machining of a component in a machining cell (12), the method incorporating closed-loop control based on feedback of measured parameters, **characterised in that** the method comprises the steps of:
a. taking a component (18) from a component holder (16);
b. measuring predetermined relevant dimensions of the component;
c. comparing the measured dimensions against design data defining the required final shape for the component, to define the material removal necessary to bring the component to the required shape;
d. if the comparison indicates that the component is already within specification, returning the component to the component holder;
e. if the comparison indicates that it is impossible to make the required shape of the component, rejecting the component;
f. otherwise, using the results of the comparison to define the material removal that is needed to bring the component to the required shape;
g. performing the defined material removal;
h. returning the component to the component holder.

2. A method as claimed in claim 1, in which the machining cell comprises more than one machine (30, 31) or tool (32, 33), and in which in steps f. and g. the material removal utilises more than one machine or tool.

3. A method as claimed in claim 1 or claim 2, in which the component is held in a manipulator (22) throughout the method.

4. A method as in any preceding claim, in which the measured parameters comprise one or more of: component measurements, tool measurements, machine measurements, environment measurements.

5. A method as in any preceding claim, in which the measured parameters are stored for future use.

6. A method as in any preceding claim, in which at least some of the measured parameters are used to generate statistical information about the process.

7. A method as in claim 6, in which the statistical information is used to adjust the process.

## Patentansprüche

1. Verfahren zur Steuerung von Maschinen, die für die maschinelle Bearbeitung von Bauteilen in einer Zelle (12) für eine Maschinelle Bearbeitung verwendet werden, wobei das Verfahren eine in geschlossener Schleife verlaufende Regelung auf der Grundlage einer Rückführung von gemessenen Parametern beinhaltet, **dadurch gekennzeichnet, dass** das Verfahren die folgenden Schritte umfasst:
a. Entnehmen eines Bauteils (18) aus einem Bauteil-Halter (16);
b. Messen vorgegebener wesentlicher Abmessungen des Bauteils;
c. Vergleichen der gemessenen Abmessungen mit Konstruktionsdaten, die die erforderliche endgültige Form des Bauteils definieren, um die Entfernung von Material zu definieren, die erforderlich ist, um das Bauteil auf die erforderliche Form zu bringen;
d. wenn der Vergleich anzeigt, dass das Bauteil bereits den Spezifikationen entspricht, Zurückführen des Bauteils zu dem Bauteil-Halter;
e. wenn der Vergleich anzeigt, dass es unmöglich ist, die erforderliche Form des Bauteils herzustellen, Verwerfen des Bauteils;
f. Anderenfalls Verwenden der Ergebnisse des Vergleichs zur Definition der Material-Entfernung, die erforderlich ist, um das Bauteil auf die erforderliche Form zu bringen;
g. Ausführen der definierten Materialentfernung;
h. Zurückbringen des Bauteils zu dem Bauteil-Halter.

2. Verfahren nach Anspruch 1, bei dem die Zelle für die maschinelle Bearbeitung mehr als eine Maschine (30, 31) oder Werkzeug (32, 33) umfasst, und bei dem in den Schritten f. und g. für die Materialentfernung mehr als eine Maschine oder ein Werkzeug verwendet wird.

3. Verfahren nach Anspruch 1 oder 2, bei dem das Bauteil während des gesamten Verfahrens in einem Manipulator (22) gehalten wird.

4. Verfahren nach einem der vorhergehenden Ansprüche, bei dem die gemessenen Parameter eines oder mehreres von Folgendem umfassen: Bauteil-Messungen, Werkzeug-Messungen, Maschinen-Messungen, Umgebungs-Messungen.

5. Verfahren nach einem der vorhergehenden Ansprüche, bei dem die gemessenen Parameter für eine zukünftige Verwendung gespeichert werden.

6. Verfahren nach einem der vorhergehenden Ansprüche, bei dem zumindest einige der gemessenen Parameter zur Erzeugung statistischer Information über den Prozess verwendet werden.

7. Verfahren nach Anspruch 6, bei dem die statistische Information zur Einstellung des Prozesses verwendet wird.

## Revendications

1. Procédé de commande de machines utilisées pour l'usinage d'un composant dans une cellule d'usinage (12), le procédé incorporant une commande en boucle fermée basée sur la rétroaction de paramètres mesurés, **caractérisé en ce que** le procédé comprend les étapes consistant à :
a. prendre un composant (18) dans un porte-composants (16) ;
b. mesurer des dimensions pertinentes prédéterminées du composant ;
c. comparer les dimensions mesurées avec des données de conception définissant la forme finale requise pour le composant, pour définir le retrait de matériau nécessaire pour amener le composant à la forme requise ;
d. si la comparaison indique que le composant est déjà dans les limites de la spécification, ramener le composant dans le porte-composants ;
e. si la comparaison indique qu'il est impossible de réaliser la forme requise du composant, rejeter le composant ;
f. autrement, utiliser les résultats de la comparaison pour définir le retrait de matériau qui est nécessaire pour amener le composant à la forme requise ;
g. effectuer le retrait de matériau défini ;
h. ramener le composant dans le porte-composants.

2. Procédé selon la revendication 1, dans lequel la cellule d'usinage comprend plusieurs machines (30, 31) ou outils (32, 33), et dans lequel, aux étapes f. et g. le retrait de matériau utilise plusieurs machines ou outils.

3. Procédé selon la revendication 1 ou la revendication 2, dans lequel le composant est maintenu dans un manipulateur (22) pendant tout le procédé.

4. Procédé selon l'une quelconque des revendications précédentes, dans lequel les paramètres mesurés comprennent une ou plusieurs : de mesures de composant, de mesures d'outil, de mesures de machine, de mesures d'environnement.

5. Procédé selon l'une quelconque des revendications précédentes, dans lequel les paramètres mesurés sont mémorisés pour une utilisation future.

6. Procédé selon l'une quelconque des revendications précédentes, dans lequel au moins certains des paramètres mesurés sont utilisés pour générer des informations statistiques concernant le processus.

7. Procédé selon la revendication 6, dans lequel les informations statistiques sont utilisées pour ajuster le processus.
